# EUROPÄISCHE PATENTANMELDUNG

(11) **EP 0 646 701 A1**
(43) Veröffentlichungstag der Anmeldung: **05.04.1995**
(21) Anmeldenummer: 93890176.6
(22) Anmeldetag: 06.09.1993
(51) Int. Cl.: F01M 1/06, F16J 1/16

(54) **Brennkraftmaschine mit Kurbelkastenansaugung**

(71) Anmelder: AVL Gesellschaft für Verbrennungskraftmaschinen und Messtechnik mbH.Prof.Dr.Dr.h.c. Hans List, A-8020 Graz (AT)
(72) Erfinder: Wünsche, Peter, Dipl.-Ing., A-8010 Graz (AT); Prevedel, Kurt, Ing., A-8041 Graz (AT); Knoll, Reinhard, Ing., A-8010 Graz (AT)
(74) Vertreter: Krause, Walter, Dr. Dipl.-Ing.

(57) **Zusammenfassung**

Bei durch den Kurbelkasten ansaugenden Brennkraftmaschinen erfolgt die Schmierung der Pleuellager (5, 3) und der Kolbenlaufbahn (29) üblicherweise durch Zugabe der erforderlichen Ölmenge zur Ansaugluft, was sich sehr nachteilig auf die Abgasemissionen und den Ölverbrauch solcher Motoren auswirkt. Um bei hoher Betriebssicherheit die Abgasemissionen zu verbessern und den Ölverbrauch zu reduzieren, wird vorgeschlagen, daß zur Schmierung zumindest der Kurbelwellenlager (7) eine Ölumlaufschmierung vorgesehen ist, und zumindest ein Kurbelwellenlager 7 durch einen Ölkanal (8) innerhalb der Kurbelwelle (6) mit dem Pleuelfußlager (5) und dieses wiederum durch einen Ölkanal (10) innerhalb der Pleuelstange (4) mit dem Kolbenbolzenlager (3) strömungsverbunden ist, und daß Mittel zur Ölabdichtung der Kurbelwellenlager (7), Pleuelfußlager (5) und Kolbenbolzenlager (3) gegenüber dem Kurbelraum vorgesehen sind.

## Beschreibung

Die Erfindung betrifft eine Brennkraftmaschine mit Kurbelkastenansaugung mit Zumindest einem hin- und hergehenden Kolben, welcher über ein Kolbenbolzenlager mit einer Pleuelstange gelenkig verbunden ist, welche über ein Pleuelfußlager an einer in Kurbelwellenlagern geführten Kurbelwelle angreift.

Bei derartigen Brennkraftmaschinen wird der Kurbelraum als Vorverdichtungs- oder Spülpumpe genutzt. Zur Schmierung der Kurbelwellenlager und der Zylinderbüchse wird dabei bei bekannten Bauformen die erforderliche Ölmenge der Ansaugluft beigemengt. Da dabei nur ein geringer Anteil des beigemengten Öles auch wirklich an die zu schmierenden Stellen, Lager und Kolbenlaufbahn gelangt, ist zum sicheren Motorbetrieb eine mehrfache Überdosierung mit ihren bekannten negativen Auswirkungen auf den Ölverbrauch, die Abgasemissionen und das Image solcher Motoren notwendig. Andererseits führt eine zugunsten der Abgasemissionen reduzierte Ölbeimengung zur Einbuße an Motorlebensdauer.

Ziel der Erfindung ist es, diese Nachteile zu vermeiden und ein Schmiersystem für durch den Kurbelraum ansaugende Brennkraftmaschinen vorzuschlagen, bei dem der Ölverbrauch und die Abgasemissionen bei hoher Motorlebensdauer deutlich verbessert werden.

Erfindungsgemäß wird dies dadurch erreicht,daß zur Schmierung zumindest der Kurbelwellenlager eine Ölumlaufschmierung vorgesehen ist, und zumindest ein Kurbelwellenlager durch einen Ölkanal innerhalb der Kurbelwelle mit dem Pleuelfußlager und dieses wiederum durch einen Ölkanal innerhalb der Pleuelstange mit dem Kolbenbolzenlager strömungsverbunden ist, und daß Mittel zur Ölabdichtung der Kurbelwellenlager, Pleuelfußlager und Kolbenbolzenlager gegenüber dem Kurbelraum vorgesehen sind. Die Ölzufuhr in die Kurbelwelle erfolgt dabei im Bereich des Kurbelwellenlagers. Durch die Ölkanäle wird allen Schmierstellen die nötige Ölmenge zugeführt. Durch die Mittel zur Ölabdichtung wird ein Austritt des Öles in den Kurbelraum verhindert, sodaß die Ansaugluft quasi ölfrei bleibt.

Ölumlaufschmierungen werden vor allem bei herkömmlichen Viertakt-Brennkraftmaschinen eingesetzt. Der Kurbelraum dient dabei meistens als Ölauffangbehälter. Auf durch den Kurbelraum ansaugende Brennkraftmaschinen, insbesondere Zweitakt-Brennkraftmaschinen, konnte bisher dieses bekannte System der Ölumlaufschmierung nicht oder nur mit gravierenden Nachteilen übertragen werden.

Vorteilhafterweise bestehen die Mittel zur Abdichtung der Kurbelwellenlager gegenüber dem Kurbelraum aus vorzugsweise reibungslosen Wellendichtringen. Die Mittel zur Abdichtung des Pleuelfußlagers können als kombinierte Führungs- und Dichtringsegmente im Bereich der Kurbelwangen ausgebildet sein. Jedes Dichtringsegment besteht dabei beispielsweise aus zweiteiligen Kunststoffringen, welche beim Einbau radial an der Kurbelwelle anliegen und nach anfänglichem Einlaufverschleiß mit minmal möglichem Radialspalt am zum Lagerzapfen konzentrischen Ansätzen dichten. Aufgrund ihrer guten Gleiteigenschaften übernehmen die Ringe auch die Funktion der axialen Führung des Pleuels zwischen den Kurbelwangen sowie an ihren Innenseiten auch die Axialführung des Pleuelfußlagers. Die Mittel zur Abdichtung des Kolbenbolzenlagers können aus ringförmigen, elastischen Dichtelementen um den Kolbenbolzen zwischen dem kleinen Pleuelauge der Pleuelstange und der Kolbenbolzennabe bestehen. Damit wird eine weitgehende Abdichtung der Lagerstellen gegenüber dem Kurbelraum erreicht.

In einer bevorzugten Ausführungsvariante der Erfindung ist vorgesehen, daß im Ölkanal der Pleuelstange, vorzugsweise im Bereich des Pleuelfußes, ein Rückschlagventil angeordnet ist. Dieses Ventil verhindert, daß sich sich im Bereich des unteren Totpunktes im Lagerraum des Pleuelfußlagers Öl ansammelt, und mit hohem Druck an die Spaltdichtung gelangt.

In weiterer Ausgestaltung der Erfindung kann vorgesehen sein, daß im Bereich des Pleuelfußlagers innerhalb des großen Pleuelauges zumindest eine ringförmig umlaufende Nut vorgesehen ist, welche einen mit dem Ölkanal der Pleuelstange strömungsverbundenen Ölsammelraum bildet, wobei die Radialerstreckung der Nut in Richtung des Ölkanals am größten ist. In dem durch die Nut gebildeten Ringraum sammelt sich das aus dem Pleuelfußlager austretende Öl und wird durch die Fliehkraft dem Rückschlagventil zugeführt.

In weiterer Ausführung der Erfindung ist vorgesehen, daß der Kolben zwischen Kolbenhemd und Kolbenbolzenlager zumindest eine Ölbohrung aufweist, welche mit dem Ölkanal der Pleuelstange in Strömungsverbindung steht. Das durch den Ölkanal innerhalb der Pleuelstange an das Kolbenbolzenlager geführte Öl gelangt über die Ölbohrung im Kolben an das Kolbenhemd und dient hier zur Schmierung der Kolbenlaufbahn an der Zylinderwand. Um das Schmieröl gleichmäßig auf die Zylinderwand zu bringen kann vorgesehen sein, daß im Austrittsbereich der Ölbohrung aus dem Kolbenhemd der Kolben porös ausgeführt ist.

Um den maximalen Ölstrom zum Pleuelfußlager zu begrenzen, ist es vorteilhaft wenn ein Drossel- und/oder Filtereinsatz im Ölkanal zwischen Kurbelwellenlager und Pleuelfußlager angeordnet ist.

In einer sehr vorteilhaften Ausführungsvariante ist vorgesehen, daß im Ölkanal zwischen Kurbelwellenlager und Kolbenbolzenlager eine Dosiereinrichtung vorgesehen ist, welche den Strömungsquerschnitt des Ölkanals, vorzugsweise in Abhängigkeit von zumindest einem Motorbetriebsparameter, wie Motordrehzahl oder Temperatur, verändert. Durch die Dosiereinrichtung wird den Schmierstellen nur mehr die zur Schmierung benötigte Ölmenge zugemessen.

Ein äußerst geringer Ölverbrauch ist zu erreichen, wenn die Dosiereinrichtung im Strömungskanal zwischen Kurbelwellenlager und Pleuelfußlager, vorzugsweise innerhalb einer Kurbelwange, angeordnet ist. Sowohl das Kolbenbolzenlager, als auch das Pleuelfußlager bekommen damit lediglich die Mindestölmenge zugemessen.

In einer bevorzugten Ausführungsvariante ist vorgesehen, daß das Rückschlagventil als Dosiereinrichtung ausgeführt und das Pleuelfußlager in den geschlossenen Kreislauf der Umlaufschmierung integriert ist. Dadurch, daß das Rückschlagventil nun auch die Funktion eines Dosierventiles übernimmt, kann ein Bauteil eingespart werden.

Weiters ist vorgesehen, daß die Mittel zur Abdichtung der Kurbelwellenlager gegenüber dem Kurbelraum jeweils in einer umlaufenden Ringnut der Kurbelwelle im Bereich der Kurbelwellenlagerbügel angeordnet sind. Diese Abdichtung empfiehlt sich besonders dann, wenn die Dosiereinrichtung im Strömungskanal zwischen Kurbelwellenlager und Pleuelfußlager angeordnet ist.

In einer äußerst vorteilhaften Ausführungsvariante der Erfindung ist vorgesehen, daß die Mittel zur Abdichtung der Kurbelwellenlager gegenüber dem Kurbelraum jeweils in einer umlaufenden Nut im Umfangsbereich einer als zylindrischen Hubscheibe gestalteten Kurbelwange, vorzugsweise im Mantel der Hubscheibe, angeordnet sind. Durch die scheibenförmige Ausführung der Kurbelwange kann die Abdichtung nun direkt an dessen Umfang erfolgen. Dies hat den Vorteil, daß das Vorverdichtungsvolumen des Kurbelraums reduziert und damit der Vorverdichtungswirkungsgrad deutlich gesteigert werden kann. Das Pleuelfußlager kann dabei in einfacher Weise in den geschlossenen Schmierölkreislauf integriert werden, wenn die Hubscheibe im äußeren Scheibenbereich einen Ölabflußkanal zwischen Pleuelfußlager und einem zwischen Hubscheibe und Kurbelgehäuse ausgebildeten Ölsammelraum aufweist, wobei vorzugsweise die Hubscheibe auf der zum Kurbelwellenlager gerichteten Seite ringförmige Ausformungen aufweist.

In einer Ausführungsvariante der Erfindung mit äußerst geringem Ölverbrauch ist vorgesehen, daß das Pleuelfußlager und das Kolbenbolzenlager als Wälzlager und das Kurbelwellenlager jeweils als Gleitlager ausgeführt ist. Eine derartige Lagerausführung ist bei jeder der erfindungsgemäßen Ausführungsvarianten möglich.

In einer weiteren bevorzugten Ausführungsvariante bei der das Pleuelfußlager in die Ölumlaufschmierung integriert ist, ist vorgesehen, daß das Kurbelwellenlager und das Pleuelfußlager jeweils als Gleitlager und das Kolbenbolzenlager als Wälzlager ausgeführt ist.

Eine besonders zuverlässige Abdichtung bei sehr geringen Reibungsverlusten läßt sich dadurch erreichen, daß der reibungslose Wellendichtring aus einem mehrstückigen Dichtringelement besteht, welches einen sich aus zwei im Querschnitt U-förmigen Ringhälften zusammensetzenden Nutring aufweist, in dessen Umfangsnut ein einteiliger, offener, elastischer Spannring eingespannt ist, der sich an seinem äußeren Umfang an einem feststehenden Lagerbügel oder einem Gehäuseansatz abstützt, wobei das feststehende Dichtelement in einer Nut der rotierenden Wellen mit geringem Spiel zu dieser angeordnet ist. Das nicht umlaufende Dichtelement kann in seiner Aufnahmebohrung axial verschoben werden.

In weiterer Ausgestaltung der Erfindung ist vorgesehen, daß das Rückschlagventil aus einem elastischen, drehsymmetrischen Lippenventil besteht, welches in einer etwa normal auf den Ölkanal der Pleuelstange stehenden Zylinderbohrung im Bereich des Pleuelfußlagers angeordnet ist, wobei das Lippenventil an seinen beiden äußeren Enden die Zylinderbohrung abdichtende, zylindrische Endstopfen aufweist, zwischen welchen zumindest zwei über ringförmige Dichtlippen getrennte Ringräume ausgebildet sind, von welchen zumindest ein Ringraum mit den zum Kolbenbolzenlager führenden Ölkanal und zumindest ein anderer Ringraum mit dem Pleuelfußlager direkt strömungsverbunden ist, und wobei die Dichtlippen durch ihre tellerartige Formgebung den Durchfluß in Richtung des Kolbenbolzenlagers freigeben, aber in der umgekehrten Richtung sperren. Dadurch wird einerseits ein Rückströmen des Öles aus der Pleuelstange in Richtung des Pleuelfußlagers verhindert und andererseits die Förderung des Öles in Richtung des Kolbens ermöglicht.

Das Ansprechverhalten des Rückschlagventiles kann in vorteilhafterweise dadurch abgestimmt werden, daß im Lippenventil ein durchgehender, achsgleicher und drehsymmetrischer Hohlraum vorgesehen ist, der im Bereich der Endstopfen und der Dichtlippen die kleinsten Durchmesser aufweist, sodaß eine im eingebauten Zustand in den Hohlraum eingeschobener Zylinderstift Stopfen und Dichtlippen gegen die Zylinderbohrung vorspannt. Durch Einpressen des Zylinderstiftes in die Innenbohrung des Lippenventiles werden die Endstopfen aufgeweitet und bewirken eine zuverlässige Dichtung nach außen.

In einer bevorzugten Ausführungsvariante der Erfindung ist vorgesehen, daß die Dosiereinrichtung durch ein in Richtung der Schließstellung federbelastetes, bezüglich der Kurbelwellenachse radial angeordnetes Nadelventil gebildet ist, dessen Nadelspitze etwa auf die Kurbelwellenachse gerichtet ist. Das Nadelventil ist dabei so ausgelegt, daß sein Drosselquerschnitt in Abhängigkeit der Drehzahl (Fliehkraft) variiert und so jeweils passende Ölmengen den Schmierstellen zudosiert. Weiters wirkt sich die Öltemperatur durch entsprechende Längendehnung der Nadel aus, wodurch durch geeignete Materialwahl eine temperaturabhängige Öldosierung zu erzielen ist.

Die Erfindung wird anhand der Figuren näher erläutert.

Es zeigen:
- Fig. 1: eine erste Ausführungsvariante des erfindungsgemäßen Schmiersystems des Kurbelwellen-, Pleuelfuß- und Kolbenbolzenlagers mit Teilschnitten,
- Fig. 2: eine Seitenansicht der Pleuelstange und des Kolbens,
- Fig. 3: ein Detail aus Fig. 1 in vergrößertem Maßstab,
- Fig. 3a: ein erfindungsgemäßes Rückschlagventil im Detail.
- Fig. 4: eine weitere Ausführungsvariante der Erfindung,
- Fig. 5: eine Detailansicht aus Fig. 4 in vergrößertem Maßstab mit einem als Wälzlager ausgeführten Pleuelfußlager.

Funktionsgleiche Teile sind mit den gleichen Bezugszeichen versehen.

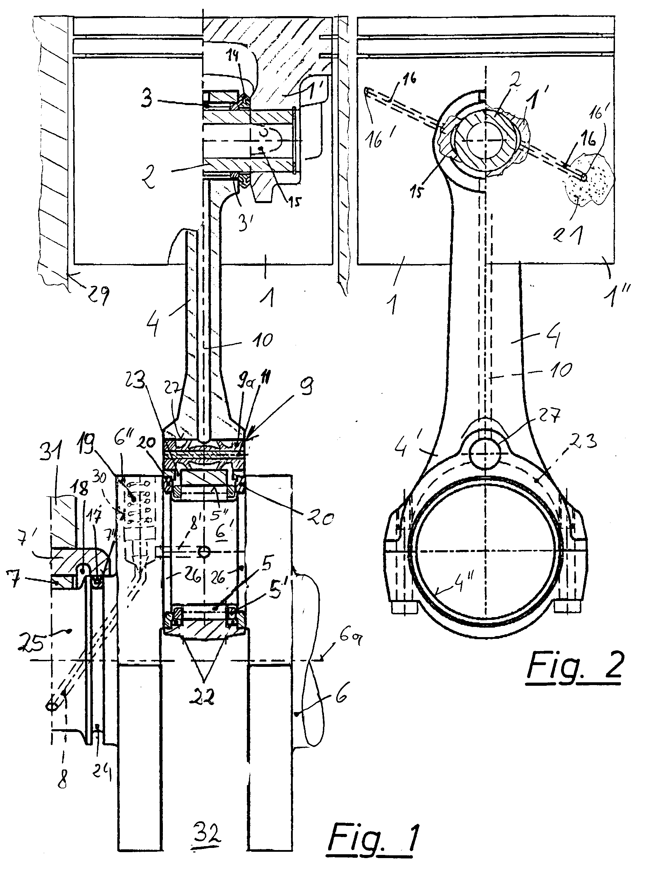

Fig. 1 zeigt einen Kolben 1, welcher über den Kolbenbolzen 2 und das Kolbenbolzenlager 3 mit einer Pleuelstange 4 gelenkig verbunden ist. Die Pleuelstange 4 greift über das Pleuelfußlager 5 am Kurbelzapfen 6' der Kurbelwelle 6 an. Die Kurbelwelle 6 ist durch das Kurbelwellenlager 7 um die Kurbelwellenachse 6a drehbar im Kurbelgehäuse 31 gelagert. Das Kurbelwellenlager 7 ist über den Lagerbügel 7' mit dem Kurbelgehäuse 1' verbunden. Das Kurbelwellenlager 7 wird über eine nicht näher dargestellte Ölzuführleitung mit Schmieröl versorgt. Das Kurbelwellenlager 7 ist als Gleitlager ausgeführt, was akustische Vorteile und eine einfache Weiterleitung des Öles zum Pleuel 4 ermöglicht. Beidseits des Kurbelwellenlagers 7 befindet sich je ein Wellendichtring 17, welcher in einer in die Kurbelwelle 6 eingestochenen Ringnut 24 mit engem axialem Spiel läuft.

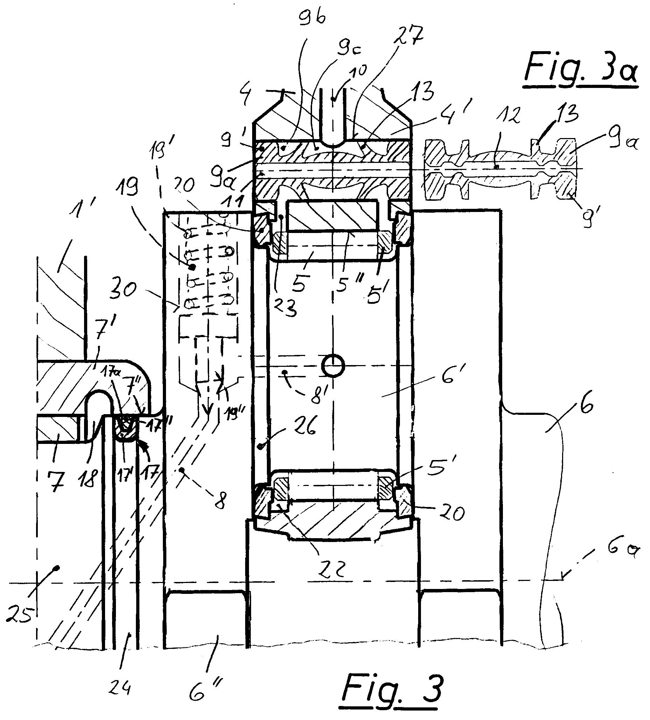

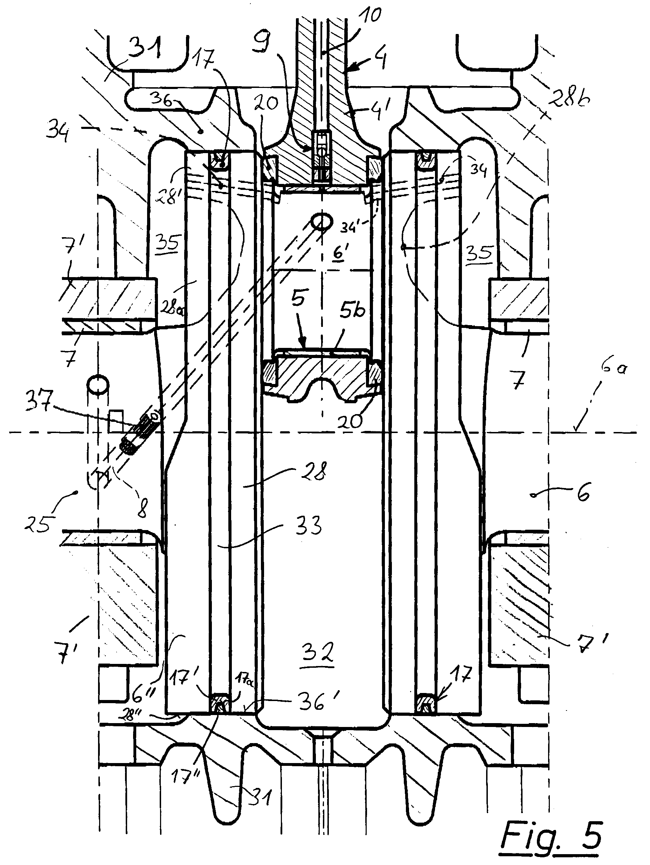

Der Wellendichtring 17 besteht aus einem Nutring 17', in dessen außen umlaufender Umfangsnut 17a ein einteiliger, offener Spannring 17'' eingeknipst ist, wie aus Fig. 3 oder 5 zu entnehmen ist. Der vorteilhafterweise aus Kunststoff bestehende Spannring 17'' besitzt bezüglich der Lagergrundbohrung 7'' ein gewisses radiales Aufmaß, welches bei der Montage des Kurbelwellenlagerbügels 7' den Stoß des Spannringes 17'' und die Stöße der beiden Nutringhälften 17', welche vorteilhafterweise als gebrochener Gußring ausgeführt sein können, dicht schließt. Der Wellendichtring 17 ist somit über Reibung in seiner äußeren Aufnahmebohrung 7'' gehalten, kann jedoch axial verschoben werden, um Toleranzen und groben Verlagerungen der Kurbelwelle (vor allem beim Motorzusammenbau) zu folgen. Die durch die axiale Passung des ruhenden Wellendichtringes 17 in der umlaufenden Nut 23 der Kurbelwelle 6 entstehende Dichtstruktur wirkt als Labyrinth und bewirkt eine quasi reibungsfreie Abdichtung des Lagers 7 zum Kurbelraum 32. Die axiale Verschieblichkeit des Wellendichtringes 17 ist so ausgelegt, daß übliche Druckpulsationen im Kurbelraum 32 keine Bewegung hervorrufen.

Zwischen dem Kurbelwellenlager 7 und den Wellendichtringen 17 ist ein Spalt 18 ausgebildet, über den das aus dem Kurbelwellenlager 7 austretende Öl in eine nicht weiter dargestellte Ölwanne abfließen bzw. abgesaugt werden kann.

Ein gebohrter Ölkanal 8 in den gezeigten erfindungsgemäßen Ausführungsvarianten führt vom Hauptlagerzapfen 25 zu einem Dosierventil 19, welches in eine Bohrung 30 radial in die Kurbelwange 6'' eingesetzt ist. Eine Bohrung 8' führt das Öl vom Dosierventil 19 zum Kurbelzapfen 6' und von dort weiter zur Pleuelstange 4.

Das Dosierventil 19 kann beispielsweise als Nadelventil ausgeführt sein. In Abhängigkeit von Drehzahl und Öltemperatur (Ölzähigkeit) wird die optimale Menge dosiert. Die optimale Dosierung pro Zylinder liegt größenordnungsmäßig bei einem Einzelhubraum bis 350 cm³ beispielsweise zwischen 10 bis 40 mm³/min. Die Drehzahl wird durch die Fliehkraftwirkung auf die durch die Feder 19' gelagerte Nadel 19'' berücksichtigt.

Die Öltemperatur wirkt sich durch entsprechende Längendehnung der Nadel 19' aus, die dazu aus geeignetem Material und in geeigneter Länge hergestellt ist.

Das Pleuelfußlager 5 und das Kolbenbolzenlager 3 sind wälzgelagert, wodurch eine drucklose Schmierung mit geringsten Ölmengen realisierbar ist.

Das Pleuelfußlager 5 ist beidseits mit zweiteiligen Kunststoffringsegmenten 20 abgedichtet, welche beim Einbau radial an der Kurbelwelle 6 anliegen und nach anfänglichem Einlaufverschleiß mit minimal möglichem Radialspalt an zum Lagerzapfen 6' konzentrischen Ansätzen 26 dichten. Aufgrund ihrer guten Gleiteigenschaften übernehmen die Ringsegmente 20 auch die Funktion der axialen Führung der Pleuelstange 4 zwischen den Kurbelwangen 6'' sowie, an ihren Innenseiten, auch die Axialführung des Lagerkäfigs 5' des Pleuelfußlagers 5. Zwischen der Lagerwälzfläche 5'' und den Ringsegmenten 20 ist am zusammengebauten Pleuel 4 ein umlaufender Ringraum 22 ausgebildet, welcher über eine Nut 23 im Pleuelfuß 4', das Rückschlagventil 9 und den Ölkanal 10 die Öldrainage zum Kolbenbolzenlager 3 ermöglicht. Im Ringraum 22 sammelt sich das aus dem Pleuelfußlager 5 austretende Öl durch die Fliehkraft an und wird, da die Radialerstreckung des Ringraumes 22 in der Nut 23 zum Ölkanal 10 hin zunimmt, dem Rückschlagventil 9 in der Pleuelstange 4 zugeführt. Dieses Rückschlagventil 9 verhindert, daß sich innerhalb des Pleuelfußlagers 5 Öl ansammelt und mit hohem Druck durch die Fliehkraft an die Ringsegmentdichtung 10 gelangt.

Das Rückschlagventil 9 kann als Lippenventil 9a so ausgeführt sein, wie in Fig. 3a gezeigt ist. Es hat die Aufgabe, ein Rückströmen des Öls vom Kolbenbolzenlager 3 zum Pleuelfußlager 5 zu verhindern, wenn ein entsprechendes Druckgefälle, etwa beim Beschleunigen des Kolbens 1 beim Aufwärtshub, eintritt, wobei das Lippenventil 9a so ausgelegt ist, daß es auf radial umlaufende Beschleunigungen immer gleichartig reagiert. Vorteilhafterweise besteht das Lippenventil 9a aus einem drehsymmetrischen Elastomerkörper, der mit Endstopfen 9' und Dichtlippen 13 versehen ist und welcher in eine zur Kurbelwellendrehachse 6a parallele Bohrung 27 eingeschoben wird. Durch Einpressen eines Zylinderstiftes 11 in den zentrischen Hohlraum 12 des Lippenventiles 9a werden die Endstopfen 9' aufgeweitet und dichten das Lippenventil 9a nach außen ab. Durch entsprechende Profilierung des Hohlraumes 12 kann eine unterschiedliche Vorspannung der Dichtlippen 13 gegen die Bohrung 27 erreicht werden und das Öffnungsverhalten des Lippenventils 9a beeinflußt werden. Zusätzlich zur Formvariation kann durch geeignete Werkstoffwahl das Ansprechverhalten des Lippenventils 9a beeinflußt werden. Elastomerwerkstoffe sind wegen ihrer geringen Masse und hohen Eigendämpfung besonders geeignet.

Durch den Ölkanal 10 in der Pleuelstange 4 wird das Öl zum Kolbenbolzenlager 3 geleitet. Das Kolbenbolzenlager 3 wird axial durch Dichtringe 14 abgedichtet, wodurch das Öl über Taschen 15 in der Kolbenbolzennabe 1' über Bohrungen 16 zum Kolbenhemd 1'' strömen kann und dort eine direkte Schmierung der Kolbenlaufflächen 29 bewirkt. Die aus Kunststoff bestehenden Dichtringe 14 übernehmen auch die Axialführung des Kolbenbolzenlagers 3.

Die Schmierung der Zylinderwand 29 kann punktuell am Austritt 16' der Bohrungen 16 oder flächiger durch Anordnung poröser Körper 21 - wie beispielsweise Sintereinsätze - an der Mündung 16' der Bohrung 16 im Kolbenhemd 28 erfolgen.

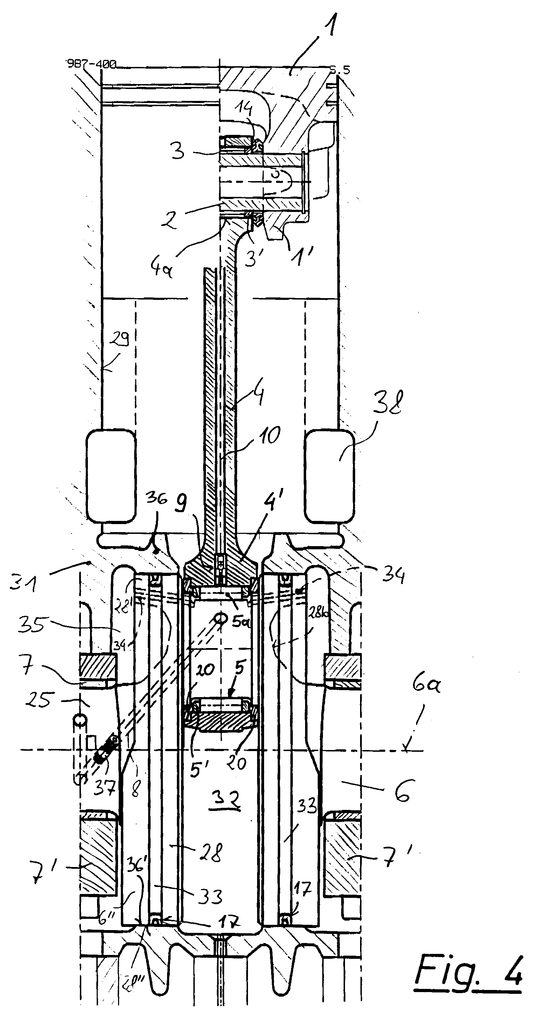

Die in Fig. 4 gezeigte Ausführungsvariante unterscheidet sich von der vorhergehenden dadurch, daß die Kurbelwange 6'' als Hubscheibe 28 ausgeführt ist. Am Mantel 28'' der Hubscheibe 28 ist eine umlaufende Nut 33 eingearbeitet, in welcher ein reibungsloser Wellendichtring 17 eingesetzt ist. Der Wellendichtring 17 stützt sich gegen den Gehäuseansatz 36 in der äußeren Aufnahmebohrung 36' ab und ist gegenüber der Kurbelwelle 6 feststehend. Zwischen der Hubscheibe 28 und dem Kurbelgehäuse 31 ist ein ringförmiger Ölsammelraum 35 ausgebildet, welcher über den Ölabflußkanal 34, der im Umfangsbereich 28' der Hubscheibe 28 etwa in Richtung der Kurbelwellenachse 6a angeordnet ist, mit dem Pleuelfußlager 5 verbunden ist. Der Eingangsbereich 34' des Ölabflußkanales 34 ist in einem von der Kurbelwellenachse 6a möglichst weit weg gelegenen Punkt des Pleuelfußlagers 5 angeordnet, sodaß das seitlich aus dem Pleuelfußlager 5 austretende Öl durch die Ölabflußkanäle 34 in den Ölsammelraum 35 zentrifugiert wird. Auf diese Weise ist das Pleuelfußlager 5 in den geschlossenen Schmierölkreislauf integriert, wobei der Kurbelraum 32 vom Ölsammelraum 35 öldicht getrennt ist. Zur Ermöglichung des Massenausgleiches sind in der Hubscheibe 28 Ausformungen 28b vorgesehen. Da das Pleuelfußlager 5 in den Schmierölkreislauf integriert ist, ist eine dosierte Schmiermittelzufuhr nur noch für das Kolbenbolzenlager 3 und die Schmierung der Zylinderwand 29 nötig. Durch entsprechende Dimensionierung und Gestaltung des Rückschlagventiles 9 kann dieses zugleich auch die Funktion der Dosiereinrichtung 19 übernehmen, sodaß ein separates Dosierventil nicht unbedingt notwendig ist. Um in dem zum Pleuelfußlager 5 führenden Ölkanal 8 den maximalen Ölstrom sinnvoll zu begrenzen, kann im Ölkanal 8 ein Drossel- und Filtereinsatz 37 vorgesehen sein.

Das Pleuelfußlager 5 kann, wie in Fig. 5 gezeigt, entweder als Wälzlager 5a oder, gemäß Fig. 4, insbesondere bei einem geschlossenen Schmierölkreislauf, als Gleitlager ausgeführt sein.

Dadurch, daß erfindungsgemäß die Schmierstellen des Kolbenbolzenlagers 3 und der Kolbenlaufbahn an der Zylinderwand 29 nur mehr mit einer Minimalölmenge versorgt werden, welche sich am kritischten Schmierparameter orientiert, und dadurch, daß der gesamte Kurbeltrieb mit geeigneten Dichtelementen öldicht gestaltet ist, kann die Ansaug- bzw. Vorverdichtungsluft quasi ölfrei gehalten werden. Die Ölnachfüllmenge aus der Verlustschmierung kann bei normalen Wartungsintervallen ausgeglichen werden.

Die Anwendung des erfindungsgemäßen Schmiersystems ist sowohl bei Zweitakt-Brennkraftmaschinen als auch bei Viertakt-Brennkraftmaschinen, welche den Kurbelraum als Pumpenraum nutzen, möglich.

## Patentansprüche

1. Brennkraftmaschine mit Kurbelkastenansaugung mit zumindest einem hin- und hergehenden Kolben (1), welcher über ein Kolbenbolzenlager (3) mit einer Pleuelstange (4) gelenkig verbunden ist, welche über ein Pleuelfußlager (5) an einer in Kurbelwellenlagern (7) geführten Kurbelwelle angreift, **dadurch gekennzeichnet**, daß zur Schmierung zumindest der Kurbelwellenlager (7) eine Ölumlaufschmierung vorgesehen ist, und zumindest ein Kurbelwellenlager 7 durch einen Ölkanal (8) innerhalb der Kurbelwelle (6) mit dem Pleuelfußlager (5) und dieses wiederum durch einen Ölkanal (10) innerhalb der Pleuelstange (4) mit dem Kolbenbolzenlager (3) strömungsverbunden ist, und daß Mittel zur Ölabdichtung der Kurbelwellenlager (7), Pleuelfußlager (5) und Kolbenbolzenlager (3) gegenüber dem Kurbelraum vorgesehen sind.

2. Brennkraftmaschine nach Anspruch 1, **dadurch gekennzeichnet**, daß die Mittel zur Abdichtung der Kurbelwellenlager (7) gegenüber dem Kurbelraum (32) aus, vorzugsweise reibungslosen, Wellendichtringen (17) bestehen.

3. Brennkraftmaschine nach Anspuch 1 oder 2, **dadurch gekennzeichnet**, daß die Mittel zur Abdichtung des Pleuelfußlagers (5) als kombinierte Führungs- und Dichtringsegmente (20) im Bereich der Kurbelwangen (6'') ausgebildet sind.

4. Brennkraftmaschine nach einem der Ansprüche 1 bis 3, **dadurch gekennzeichnet**, daß die Mittel zur Abdichtung des Kolbenbolzenlagers (3) aus ringförmigen, elastischen Dichtelementen (14) um den Kolbenbolzen (2) zwischen dem kleinen Pleuelauge (4a) der Pleuelstange (4) und der Kolbenbolzennabe (1') bestehen.

5. Brennkraftmaschine nach einem der Ansprüche 1 bis 4, **dadurch gekennzeichnet**, daß im Ölkanal (10) der Pleuelstange (4), vorzugsweise im Bereich des Pleuelfußes (4'), ein Rückschlagventil (9) angeordnet ist, welches den Ölfluß nur in Richtung des Kolbenbolzenlagers (3) freigibt.

6. Brennkraftmaschine nach einem der Ansprüche 1 bis 5, **dadurch gekennzeichnet**, daß im Bereich des Pleuelfußlagers (5) innerhalb des großen Pleuelauges (4b) zumindest eine ringförmig umlaufende Nut (23) vorgesehen ist, welche einen mit dem Ölkanal (10) der Pleuelstange (4) strömungsverbundenen Ölsammelraum (22) bildet, wobei die Radialerstreckung der Nut (23) in Richtung des Ölkanals (10) am größten ist.

7. Brennkraftmaschine nach einem der Ansprüche 1 bis 6, **dadurch gekennzeichnet**, daß der Kolben (1) zwischen Kolbenhemd (1'') und Kolbenbolzenlager (3) zumindest eine Ölbohrung (16) aufweist, welche mit dem Ölkanal (10) der Pleuelstange (4) in Strömungsverbindung steht.

8. Brennkraftmaschine nach Anspruch 7, **dadurch gekennzeichnet**, daß im Austrittsbereich (16') der Ölbohrung (16) aus dem Kolbenhemd (1'') der Kolben (1) porös ausgeführt ist.

9. Brennkraftmaschine nach einem der Ansprüche 1 bis 8, **dadurch gekennzeichnet**, daß ein Drossel- und/oder Filtereinsatz (37) im Ölkanal (8) zwischen Kurbelwellenlager (7) und Pleuelfußlager (5) angeordnet ist.

10. Brennkraftmaschine nach einem der Ansprüche 1 bis 9, **dadurch gekennzeichnet**, daß im Ölkanal (8) zwischen Kurbelwellenlager (7) und Kolbenbolzenlager (3) eine Dosiereinrichtung (19, 9) vorgesehen ist, welche den Strömungsquerschnitt des Ölkanals (8, 10), vorzugsweise in Abhängigkeit von zumindest einem Motorbetriebsparameter, wie Motordrehzahl oder Temperatur, verändert.

11. Brennkraftmaschine nach Anspruch 10, **dadurch gekennzeichnet**, daß die Dosiereinrichtung (19) im Strömungskanal zwischen Kurbelwellenlager (7) und Pleuelfußlager (5), vorzugsweise innerhalb einer Kurbelwange (6''), angeordnet ist.

12. Brennkraftmaschine nach Anspruch 10, **dadurch gekennzeichnet**, daß das Rückschlagventil (9) als Dosiereinrichtung ausgeführt und das Pleuelfußlager (5) in den geschlossenen Kreislauf der Umlaufschmierung integriert ist.

13. Brennkraftmaschine nach einem der Ansprüche 1 bis 11, **dadurch gekennzeichnet**, daß die Mittel (17) zur Abdichtung der Kurbelwellenlager (7) gegenüber dem Kurbelraum (32) jeweils in einer umlaufenden Ringnut (24) der Kurbelwelle (6) im Bereich der Kurbelwellenlagerbügel (7') angeordnet sind.

14. Brennkraftmaschine nach einem der Ansprüche 1 bis 10 und 12, **dadurch gekennzeichnet**, daß die Mittel (17) zur Abdichtung der Kurbelwellenlager (7) gegenüber dem Kurbelraum (32) jeweils in einer umlaufenden Nut (33) im Umfangsbereich (28') einer als zylindrischen Hubscheibe (28) gestalteten Kurbelwange (6''), vorzugsweise im Mantel (28'') der Hubscheibe (28), angeordnet sind.

15. Brennkraftmaschine nach Anspruch 14, **dadurch gekennzeichnet**, daß die Hubscheibe (28) im äußeren Scheibenbereich (28') einen Ölabflußkanal (34) zwischen Pleuelfußlager (5) und einem zwischen Hubscheibe (28) und Kurbelgehäuse (31) ausgebildeten Ölsammelraum (35) aufweist, wobei vorzugsweise die Hubscheibe (28) auf der zum Kurbelwellenlager (7) gerichteten Seite (28a) ringförmige Ausformungen (28b) aufweist.

16. Brennkraftmaschine nach einem der Ansprüche 1 bis 15, **dadurch gekennzeichnet**, daß das Pleuelfußlager (5) und das Kolbenbolzenlager (3) als Wälzlager und das Kurbelwellenlager (7) jeweils als Gleitlager ausgeführt ist.

17. Brennkraftmaschine nach einem der Ansprüche 12 bis 15, **dadurch gekennzeichnet**, daß das Kurbelwellenlager (7) und das Pleuelfußlager (5) jeweils als Gleitlager und das Kolbenbolzenlager (3) als Wälzlager ausgeführt ist.

18. Brennkraftmaschine nach Anspruch 2, **dadurch gekennzeichnet**, daß der reibungslose Wellendichtring aus einem mehrstückigen Dichtringelement (17) besteht, welches einen sich aus zwei im Querschnitt U-förmigen Ringhälften zusammensetzenden Nutring (17') aufweist, in dessen Umfangsnut (17a) ein einteiliger, offener, elastischer Spannring (17'') eingespannt ist, der sich an seinem äußeren Umfang an einem zylindrischen Teil, wie etwa einem feststehenden Lagerbügel (7') oder einem Gehäuseansatz (36) abstützt, wobei das feststehende Dichtelement (17) in einer Nut (24, 83) der rotierenden Welle (6) mit geringem Spiel zu dieser und in seiner äußeren Aufnahmebohrung (7'', 36') axial verschiebbar angeordnet ist.

19. Brennkraftmaschine nach Anspruch 5, **dadurch gekennzeichnet**, daß das Rückschlagventil (9) aus einem elastischen, drehsymmetrischen Lippenventil (9a) besteht, welches in einer etwa normal auf den Ölkanal (10) der Pleuelstange (4) stehenden Zylinderbohrung (27) im Bereich des Pleuelfußes (4') angeordnet ist, wobei das Lippenventil (9a) an seinen beiden äußeren Enden die Zylinderbohrung (27) abdichtende, zylindrische Endstopfen (9') aufweist, zwischen welchen zumindest zwei über ringförmige Dichtlippen (13) getrennte Ringräume (9b, 9c) ausgebildet sind, von welchen zumindest ein Ringraum (9c) mit den zum Kolbenbolzenlager (3) führenden Ölkanal (10) und zumindest ein anderer Ringräume (9b) mit dem Pleuelfußlager (5) direkt strömungsverbunden ist, und wobei die Dichtlippen (13) durch ihre tellerartige Formgebung den Durchfluß in Richtung des Kolbenbolzenlagers (3) freigeben, aber in der umgekehrten Richtung sperren.

20. Brennkraftmaschine nach Anspruch 19, **dadurch gekennzeichnet**, daß im Lippenventil (9a) ein durchgehender, achsgleicher und drehsymmetrischer Hohlraum (12) vorgesehen ist, der im Bereich der Endstopfen (9') und der Dichtlippen (13) die kleinsten Durchmesser aufweist, sodaß ein im eingebauten Zustand in den Hohlraum (12) eingeschobener Zylinderstift (11) Stopfen (9') und Dichtlippen (13) gegen die Zylinderbohrung (27) vorspannt.

21. Brennkraftmaschine nach Anspruch 11, **dadurch gekennzeichnet**, daß die Dosiereinrichtung (19) durch ein in Richtung der Schließstellung federbelastetes, bezüglich der Kurbelwellenachse (6a) radial angeordnetes Nadelventil (19a) gebildet ist, dessen Nadelspitze (19') etwa auf die Kurbelwellenachse (6a) gerichtet ist.
